# EUROPEAN PATENT APPLICATION

(11) **EP 0 925 994 A1**
(43) Date of publication of application: **30.06.1999**
(21) Application number: 97830713.0
(22) Date of filing: 24.12.1997
(51) Int. Cl.: B60N 2/00, B60N 2/48

(54) **A headrest for motor verhicle seats**

(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (Torino) (IT)
(74) Representative: Plebani, Rinaldo

(57) **Abstract**

A headrest (1) for motor-vehicle seats comprising a yielding body (2) connected to a pair of supports (7), to be fixed to the backrest (S) of a motor-vehicle seat, through an articulated parallelogram system formed by two pairs of swinging arms (5, 6) through which said yielding body (2) can be displaced between a lowered position and a raised position. A locking system (24, 25) keeps the yielding body (2) in the raised position, and can be released by a lateral control push button (29) operable through a swinging lever (30) arranged on one side of the yielding body (2).

## Description

The present invention is related to headrests for motor-vehicle seats, of the type comprising a yielding body, a support structure for connecting the yielding body to the backrest of a motor-vehicle seat, and adjustment means operatively associated to the support structure to vary the height positioning of the yielding body with respect to the seat backrest.

Traditionally, in the known headrests of the above-referenced type the support structure comprises a pair of parallel rods projecting from the base of the yielding body to be connected to the structure of a seat backrest. Superiorly the two support rods are connected to a load-bearing framework incorporated within the headrest yielding body.

With this known arrangement, two systems are normally provided for the height adjustment of the yielding body: in a first system the support rods are rigidly fixed to the load-bearing framework of the yielding body, and are lowerly connected to the backrest structure in a vertically slidable way, with the aid of resilient positioning members releasably cooperating with corresponding notches formed in the lower portions of the support rods. In the second system the two support rods are rigidly secured to the backrest structure, and are slidably coupled superiorly to the load-bearing framework of the yielding body. Also in this case resilient positioning members are provided, releasably cooperating with notches formed in the upper portions of the support rods to retain the headrest yielding body in the selected position.

These traditional headrests are affected by several drawbacks. Firstly, the slidable connection between the two support rods and the backrest structure or, respectively, the load-bearing framework incorporated within the headrest yielding body may be subjected in use to slacks originating vibrations and noise. Moreover this slidable connection between the support rods and the yielding body or, respectively, the seat backrest may involve, in case of abrupt crash of the vehicle on which the headrest is installed, accidental withdrawal of the support rods and separation of the yielding body from the seat backrest, with adverse consequences for the occupants of the vehicle. Lastly these known headrests generally involve a remarkable weight, and relatively high manufacturing costs.

The object of the present invention is to overcome the above drawbacks.

According to the invention this object is achieved by the fact that a headrest for motor-vehicle seats of the type set forth at beginning is characterized in that said support structure comprises an articulated parallelogram system formed by two pairs of swinging arms by means of which said yielding body is displaceable between a lowered position and a raised position.

The articulated parallelogram system conveniently comprises two supports to be fixed to the seat backrest, an attachment structure secured to the yielding body of the headrest, and pivot pins between the swinging arms of each pair and said supports and said attachment structure, respectively.

The headrest according to the invention may advantageously further comprise releasable locking means to retain said yielding body in at least one of said raised and lowered positions. According to a preferred embodiment of the invention, these locking means may comprise at least one slider member displaceable with respect to the connecting structure, parallely to said pivot pins, between an operative condition and an inoperative condition, said at least one slider member being provided with engagement portions cooperating with at least one corresponding pair of said swinging arms to prevent, in said operative condition, rotation thereof relative to said attachment structure; manually operable release means being provided to displace said at least one slider member from said operative condition to said inoperative condition.

The release means may conveniently comprise at least one push-button arranged on one side of the yielding body and operable from outside to displace said slider member, against the action of resilient thrust means urging said at least one slider member towards its operative condition. A swinging operating lever provided on said side of the yielding body may be conveniently associated to the push-button, by which the force required to operate this push-button is quite reduced.

In a preferred embodiment of the invention, the locking means comprise two slider members, mutually displaceable each of which is provided with respective engagement portions cooperating with a corresponding pair of said swinging arms, said two slider members being connected to each other by a reversing mechanism, whereby a displacement of one slider member in one direction, operated through said manually operable release means, corresponds to a same displacement of the other slider member in the opposite direction. Said resilient thrust means may include in this embodiment reaction springs interposed between the two slider members.

By virtue of the above features, height adjustment of the yielding body of the headrest according to the invention only provides positioning the yielding body in one or in the other of said lowered and raised positions. The lowered position is corresponding to a non-operative condition of the headrest, in which upward projection and thus height encumbrance thereof is minimum so as to ensure, with particular reference to the rear seats of a motor-vehicle, the maximum rearward visibility for the driver. The raised position corresponds to the operative condition of the headrest, and intermediate position are presently considered unnecessary taking into account that, following proper dimensioning of the articulated parallelogram system, the raised position of the yielding body will suit a substantially full range of user sizes. Non-availability of intermediate headrest positioning is however largely compensated by the advantages in terms of construction simplicity, use safety and operation convenience to shift the yielding body from one to the other of the raised and lowered positions.

The invention will now be disclosed in details with reference to the accompanying drawings, purely provided by way of non limiting example, in which:
- figure **1** is a diagrammatic lateral elevational view showing the top of a motor-vehicle seat backrest on which a headrest according to the invention is installed,
- figure **2** is a longitudinally and enlarged sectioned view along line II-II of figure **1**,

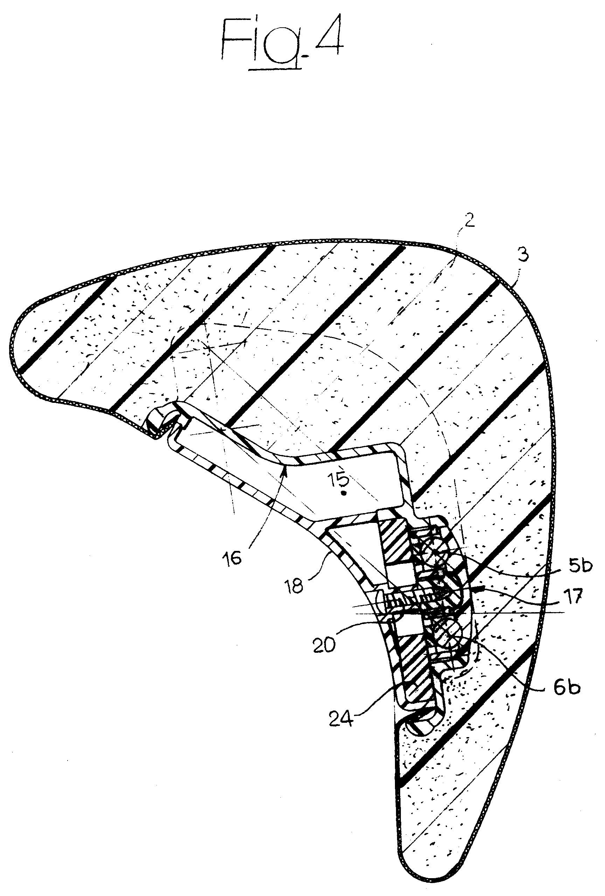

- figure **3** is a cross section along line III-III of figure 2,
- figure **4** is a cross section along line IV-IV of figure 2,
- figure **5** is a cross section along line V-V of figure 2,
- figure **6** is a longitudinal section along line VI-VI of figure 3,
- figure **7** is a sectioned and enlarged view along line VII-VII of figure 2, and
- figure **8** is a sectioned view along line VIII-VIII of figure 5.

The headrest according to the invention, generally designated as 1, essentially comprises a yielding body 2, normally made of foamed plastic material possibly covered by a fabric or the like sheet 3 and having a general shape complementary to that of the top of the backrest S of a motor-vehicle seat on which the headrest 1 is to be installed.

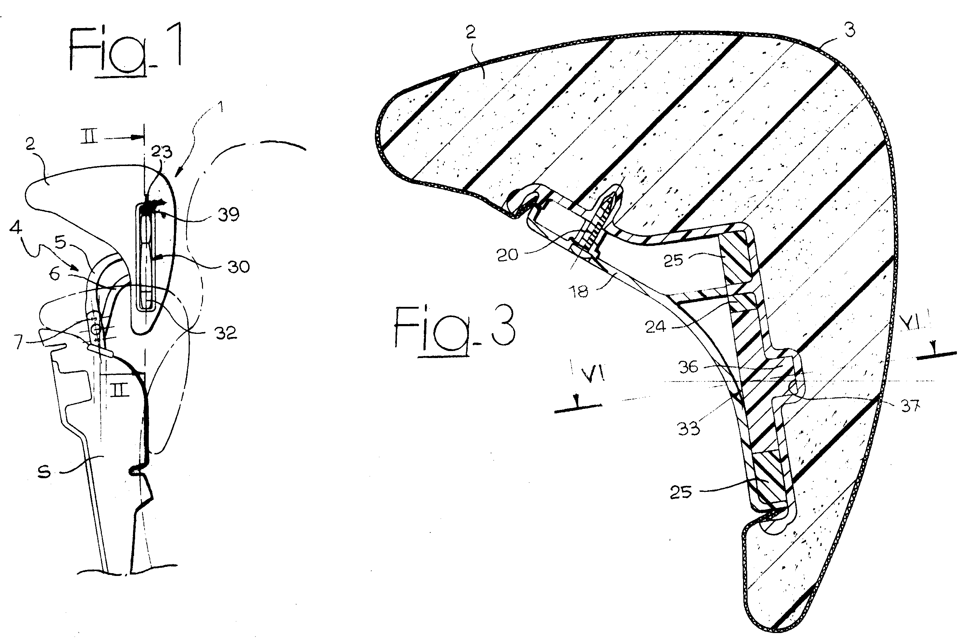

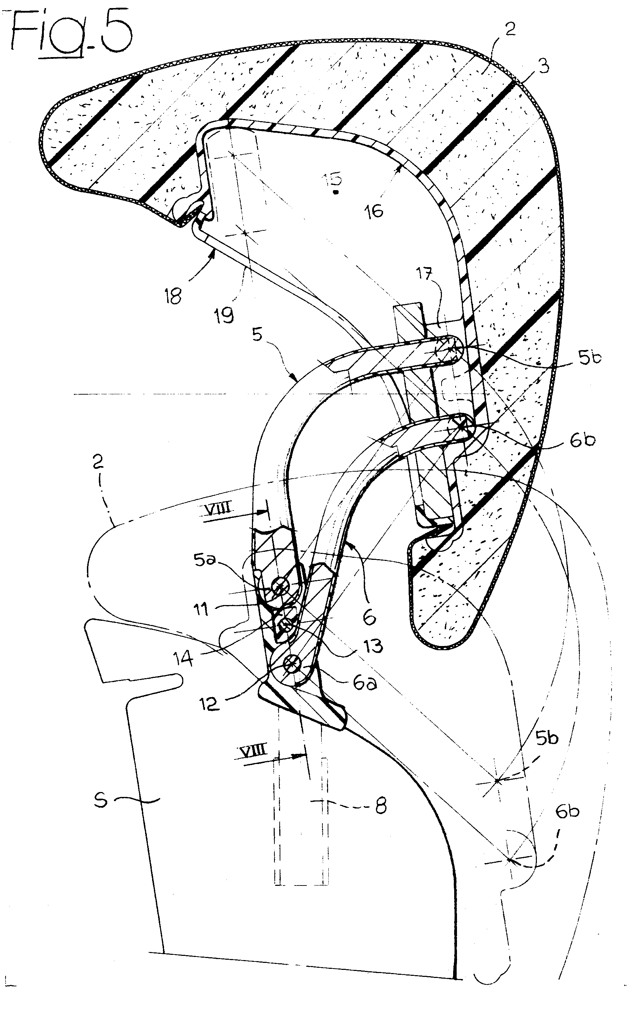

Connection of the body 2 to the seat backrest S is carried out by means of a novel and unique structure, generally designated as 4, by which the body 2 can be oscillated between a lowered position, shown by dotted lines in figures 1 and 5, in which it rests upon the top of the backrest S, and a raised position in which the body 2 is placed above the top of the backrest S, such as depicted by full lines in figures 1 and 5. Due to the peculiar arrangement of the support structure 4, which will be disclosed in more detail herebelow, when the headrest 1 is located in its lowered position the yielding body 2 is held in a slightly advanced position, so as to project towards the front bearing surface for the user of the backrest S, while when the headrest 1 is arranged in its lowered position the body 2 is slightly shifted backwardly, i.e. is substantially aligned vertically with the user bearing surface of the backrest S.

In detail, the support structure 4 comprises an articulated parallelogram system formed by two pairs of swinging arms 5, 6 having a general reversed-L shape, which pivotally connect the body 2 with a pair of respective supports 7 rigidly fixed to the structure of the backrest S so as to partially project beyond the top thereof. In more detail, and as shown in figure 8, each support 7 comprises a metal element 8 for attachment to the structure of the backrest S and whose upper portion is doubled, i.e. formed by two plates 9, 10 between which the ends 5a, 6a of a corresponding pair of swinging arms 5, 6 are rotatably mounted under friction, through respective transverse pivot pins 11, 12. The two plates 9, 10, which carry the ends of the pivot pins 11, 12, are mutually connected to each other through a transverse retainer member 13, for instance constituted by a rivet or the like, on the central portion of which an annular member 14 is mounted, which is interposed between the ends 5a ,6a of the arms 5, 6 and acts as a stop element when the body 2 is displaced to the lowered as to the raised positions.

The annular stop member 14 is normally made of moulded plastic material, and the plates 9, 10 of the support 7 are covered by an overmoulded plastic material layer. Even, the swinging arms 5, 6, possibly also with their ends 5a, 6a, are formed by a metal core covered by an overmoulded plastic material layer.

The body 2 is formed, at its rear side, with a recess 15 innerly delimited by a load-bearing framework for the yielding body 2, constituted by a rigid half-shell 16 normally made of moulded plastic material and formed inferiorly with an attachment structure generally designated as 17. The recess 15 is rearwardly closed by a cover 18, also normally made of moulded plastic material, formed with a pair of slots 19 passed through by the swinging arms 5, 6 for connection thereof to the attachment structure 17. The cover 18 is connected to the load-bearing framework 16 for instance by means of screws 20.

Connection between the two pairs of arms 5, 6 and the attachment structure 17 is performed by transverse pins parallel to the pivot pins 11, 12: actually these transverse pins are defined by terminal portions 5b, 6b of the swinging arms 5, 6 themselves, which are bent and rotatably engaged into the attachment structure 17, such as depicted in detail in figure 4.

The load-bearing framework 16 delimits, rearwardly of the attachment structure 17, a guide space generally designated as 21 and, at one side thereof, a tubular guiding appendage 22 ending at the base of an integral receptacle 23 located on one side of the yielding body 2 and whose function shall be clarified in the following.

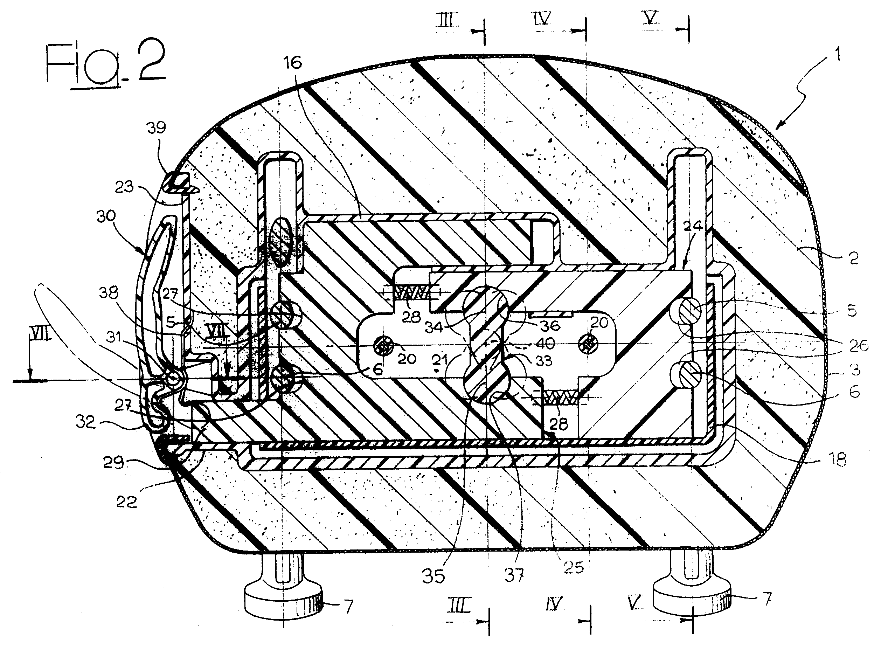

Within the guide space 21 two mutually displaceable slider members 24, 25 are slidably mounted parallely to the pivot pins 11, 12 and 5b, 6b of the swinging arms 5, 6, and each of which formed, in correspondence of the respective outer side, with a pair of notches 26, 27 having a shape complementary to that of the swinging arms 5, 6. Reaction springs 28 are interposed between the two slider members 24, 25, which act so as to space these slider members 24, 25 apart from each other, i.e. to keep them in an operative condition depicted in the drawings (as better seen in figures 2, 5 and 6) corresponding to the raised position of the body 2 of the headrest 1.

In this operative condition the notches 26, 27 of the two slider members 24, 25 laterally engage the swinging arms 5, 6 of the respective pairs, thus preventing rotation thereof relatively to the attachment structure 17. Thus the yielding body 2 is locked in its raised position.

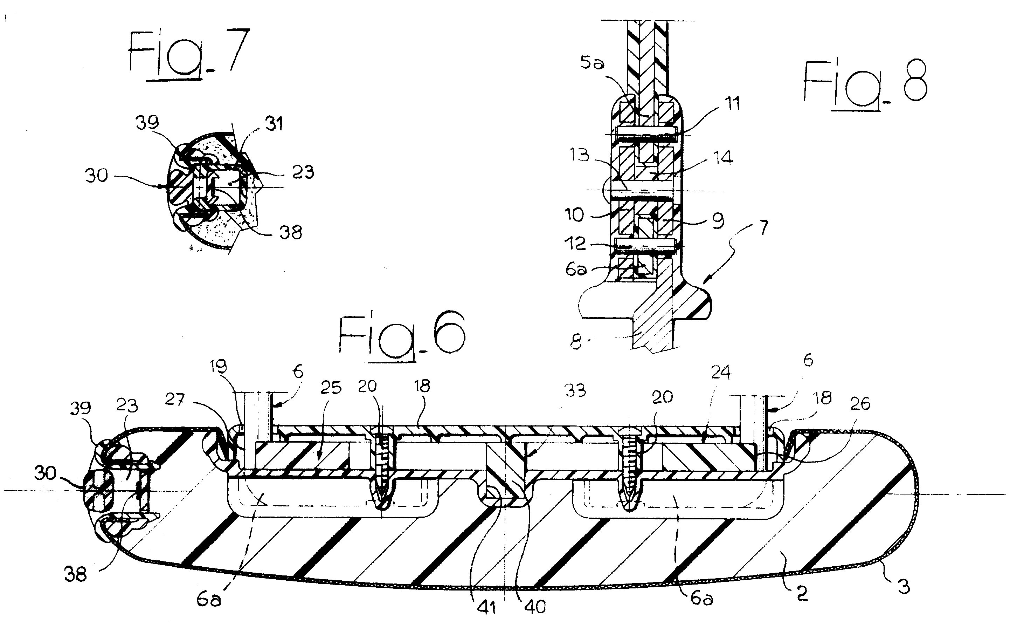

The slider member 25 is laterally provided with an integral thrust projection 29 slidably fitted within the tubular guide appendage 22 of the load-bearing structure 16 and accessible from outside at the bottom of the lateral recess 23. The projection 29 constitutes a push-button operable from outside to perform displacement of the slider member 25 towards an inoperative condition in which the notches 27 are disengaged from the related swinging arms 5, 6. Operation of the push-button 29 can be carried out directly or more conveniently, as in the case of the shown example, it can be performed through a swinging lever 30 articulated to the load-bearing framework 16, by means of an integral fork projection 31 thereof (shown in detail in figure 7), around an axis which is perpendicular to the direction of displacement of the push button 29. The swinging lever 30 has a rounded lower end 32, facing towards the push button 29, and can be rotated between the raised inoperative position shown in the drawings (full lines in figure 2) and a lowered operative position, shown by dotted lines in figure 2, in which its lower end 32 interacts with the push button 29 so as to shift the slider member 25 towards its inoperative condition, i.e. so as to disengage its notches 27 relative to the swinging arms 5, 6 of the corresponding pair. This displacement of the slider member 25 is transmitted to the slider member 24 via a reversing mechanism formed, in the shown example, simply by a connecting rod 33 formed with spherical end heads 34, 35 rotatably fitted within corresponding seats 36, 37 of the slider member 24 and of the slider member 25, respectively. The connecting rod 33 is centrally provided with an integral transverse pin 40 pivotally fitted into a corresponding central seat 41 of the load -bearing framework 16.

It will apparent that with the above-disclosed arrangement displacement of the slider member 25 in one direction (for instance to the right with reference to figure 2, following operation of the swinging lever 30) corresponds to an identical displacement of the slider member 24 in the opposite direction, i.e. to the left with reference to figure 2, i.e. towards an inoperative condition corresponding to disengagement between the notches 26 and the swinging arms 5, 6 of the other pair.

Due to the above displacements, the reaction springs 28 are compressed, whereby when the lever 30 is released the two slider members 24, 25 are urged towards the operative condition. If the body 2 is located in its raised position, the notches 26 and 27 of the two slider members 24, 25 will engage the respective swinging arms 5, 6, thus locking rotation thereof. If instead the body 2 has been moved from the raised position of the lowered position, the notches 26, 27 of the two slider members 24, 25 will not engage the swinging arms 5, 6, which shall then be free to rotate. However the lateral sides of the two slider members 24, 25 are urged by the reaction springs 28 against the corresponding lateral sides of the swinging arms 5, 6, thus acting as friction shoes to make displacement of the body 2, from the raised position to the lowered position and viceversa, frictioned.

In the lowered position of the yielding body 2, in which the rear cover 18 bears against the top of the backrest S, the two pairs of swinging arms 5, 6 and related supports 7 are substantially completely housed, through the respective slots 28, within the recess 15.

Reference numeral 38 designates a plate spring provided within the lateral recess 23 and cooperating with the swinging lever 31 so as to keep it, following a reversible snap-fit positioning thereof, in its lowered position.

Lastly, reference numeral 39 designates a trimming annular member snap-fit engaged with the load bearing framework 16 so as to peripherally enclose the lateral recess 23.

It will be apparent from the above disclosure that, due to the articulated parallelogram system defined by the swinging arms 5, 6, the yielding body 2 can be selectively located only in the one or the other of the lowered and raised positions. It however to be pointed out that expedients may be provided to set the yielding body 2 also in one or more intermediate positions comprised between the above two end positions.

Moreover, while the releasable locking system constituted by the two slider members 24, 25 is designed to lock the yielding body 2 only in the raised position, expedients may be provided to perform locking thereof even in the raised position.

It is to be further pointed out that this locking system, together with the related resilient system formed by the springs 28 and the reversing mechanism constituted by the connecting rod 33, may have a different construction with respect to the illustrated one. For example, according to an alternative embodiment not shown in the drawings, a single slider member can be provided, i.e. only the slide member 25, so as to lock only the related pair of swinging arms 5, 6. In case both slider members 24, 25 are provided. the reversing mechanism 33 may be replaced by a rack and gear system or by any equivalent device. Moreover displacement of the yielding body 2 between the raised and the lowered positions may easily be motor-driven.

Lastly, two operating levers 30 may be provided, arranged in correspondence of the opposite sides of the yielding body 2 and operating one on the slider member 25, such as previously disclosed, and the other on the slider member 24, in an identical way. This construction could be more convenient than the one disclosed with reference to the drawings, since it enables employing the headrest according to the invention indifferently for both right and left motor-vehicle seats, making it available in either case an operating lever facing towards the outer side of the vehicle, for a more easy and convenient operation by the user.

Naturally the details of construction and the embodiments may be widely varied with respect to what has been disclosed and illustrated by way of example, without thereby departing from the scope of the present invention such as defined in the appended claims.

## Claims

1. Headrest (1) for motor-vehicle seats comprising a yielding body (2), a support structure (7, 5, 6, 16, 17) for connecting the yielding body (1) to the backrest (S) of a motor-vehicle seat, and adjustment means (5, 6) operatively associated to said support structure to vary the height positioning of the yielding body (2) relative to the seat backrest (S), characterized in that said support structure comprises an articulated parallelogram system formed by two pairs of swinging arms (5, 6) by means of which said yielding body (2) can be displaced between a lowered position and a raised position.

2. Headrest according to claim 1, characterized in that said articulated parallelogram system comprises two supports (7) to be fixed to the seat backrest (S), an attachment structure (16, 17) secured to the yielding body (2) of the headrest (1), and pivot pins (11, 12, 5b, 6b) between said swinging arms (5, 6) of each pair and said supports (7) and said attachment structure (16, 17), respectively.

3. Headrest according to claim 1, characterized in that it comprises releasable locking means (24, 25) to retain said yielding body (2) in at least one of said raised and lowered positions.

4. Headrest according to claim 3, characterized in that said locking means comprise at least one slider member (24, 25) displaceable with respect to said attachment structure (16, 17), parallely to said pivot pins (11, 12, 5b, 6b) of said swinging arms (5, 6), between an operative condition and an inoperative condition, said at least one slider member (24, 25) being provided with engagement portions (26, 27) cooperating with at least one corresponding pair of said swinging arms (5, 6) to prevent, in said operative condition, rotation thereof relative to said attachment structure (16, 17); manually operable release means (29, 30) being provided to displace said at least one slider member (24, 25) from said operative condition to said inoperative condition.

5. Headrest according to claim 4, characterized in that said release means comprise at least one push button (29) arranged on one side of said yielding body (2) and operable from outside to displace said at least one slider member (24, 25) against the action of resilient thrust means (28) urging said at least one slider member (24, 25) towards said operative condition.

6. Headrest according to claim 4, characterized in that said engagement portions are formed by end recesses (26, 27) of said at least one slider member (24, 25) capable of laterally engaging said swinging arms (5, 6) in the raised position of said yielding body (2).

7. Headrest according to claim 5, characterized in that a swinging operating lever (30) provided on said side of said yielding body (2) is operatively associated to said at least one push button (28).

8. Headrest according to claim 7, characterized in that said attachment structure (16, 17) defines, in correspondence of said side of said yielding body (2), an integral pivoting support (31) for said swinging operating lever (30).

9. Headrest according to claim 8, characterized in that said attachment structure (16, 17)further defines, in correspondence of said side of said yielding body (2), a seat (23) housing said operating lever (30).

10. Headrest according to claim 5, characterized in that said locking means comprise two mutually displaceable slider members (24, 25) each of which is provided with respective engagement portions (26, 27) cooperating with a corresponding pair of said swinging arms (5, 6), said two slider members (24, 25) being connected to each other by a reversing mechanism (33), whereby a displacement of one slider member (24, 25) in one direction, operated through said manually operable release means (29, 30), corresponds to a same displacement of the other slider member (25, 24) in the opposite direction, and in that said resilient thrust means include reaction springs (28) interposed between said two slider members (24, 25).

11. Headrest according to claim 10, characterized in that during displacement of said yielding body (2) from the lowered position to the raised position and viceversa, as well as in said lowered position, said two slider members (24, 25) act as friction shoes urged by said reaction springs (28) into lateral pressure contact against said two pairs of swinging arms (5, 6).

12. Headrest according to claim 2, characterized in that said pivot pins between said swinging arms (5, 6) and said attachment structure (16, 17) are formed by terminal bent portions (5b, 6b) of said swinging arms (5, 6).

13. Headrest according to claim 2, characterized in that said attachment structure comprises a half-shell member (16) forming a load-bearing framework for the yielding body (2).

14. Headrest according to claim 13, characterized in that said half-shell (16) delimits a rear recess (15) of the yielding body (2).

15. Headrest according to claim 14, characterized in that said yielding body (2) has a shape complementary to that of the top of the seat backrest (S) and in that said yielding body (2) bears against the top of the backrest (S) in said lowered position.

16. Headrest according to claim 14, characterized in that, in said lowered position, said rear recess (15) houses said two pairs of swinging arms (5, 6) and said supports (7).

17. Headrest according to claim 2, characterized in that said two supports (7) are provided with respective stop elements (14) for said swinging arms (5, 6) at least in the lowered position of said yielding body.

18. Headrest according to claim 3, characterized in that a control push button (29) and a swinging lever (30) to operate said control push button (29) are provided in correspondence of at least one side of said yielding body (2) to release said locking means (24, 25).
